# EUROPEAN PATENT SPECIFICATION

(11) **EP 1 549 734 B1**
(45) Date of publication and mention of the grant of the patent: **05.03.2008**
(21) Application number: 03759064.3
(22) Date of filing: 03.10.2003
(51) Int. Cl.: C12G 3/06

(54) **VODKA AND A PROCESS FOR THE PRODUCTION OF VODKA**
WODKA UND VERFAHREN ZUR HERSTELLUNG VON WODKA
VODKA ET PROCEDE DE PRODUCTION DE VODKA

(30) Priority: 03.10.2002 LV 020179
(43) Date of publication of application: 06.07.2005
(73) Proprietor: Spirits Product International Intellectual Property B.V., 1445 Strassen (LU)
(72) Inventor: SHEFLER, Yuri, 129366 Moscow (RU)
(74) Representative: Jilderda, Anne Ayolt
(86) International application number: PCT/NL2003/000676
(87) International publication number: WO 2004/031341

(56) References cited:
- DATABASE WPI Section Ch, Week 200143 Derwent Publications Ltd., London, GB; Class D16, AN 2001-406599 XP002264203 & RU 2 167 932 C (BRYANSKSPIRTPROM STOCK CO), 27 May 2001 (2001-05-27)
- DATABASE WPI Section Ch, Week 200203 Derwent Publications Ltd., London, GB; Class D16, AN 2002-024524 XP002264985 & RU 2 175 010 C (BOBRYSHEV S YU), 20 October 2001 (2001-10-20)
- DATABASE WPI Section Ch, Week 200274 Derwent Publications Ltd., London, GB; Class D16, AN 2002-689204 XP002264204 & RU 2 186 845 C (RUSSIAN WINE AND VODKA CO HOLDING CO LTD), 10 August 2002 (2002-08-10)
- DATABASE WPI Section Ch, Week 200051 Derwent Publications Ltd., London, GB; Class D16, AN 2000-557186 XP002264205 & RU 2 144 949 C (VLADALKO STOCK CO), 27 January 2000 (2000-01-27)
- DATABASE WPI Section Ch, Week 198228 Derwent Publications Ltd., London, GB; Class D16, AN 1982-58926E XP002264206 & SU 863 632 A (MOSC LIQUOR-WATER), 15 September 1981 (1981-09-15)
- DATABASE WPI Section Ch, Week 199622 Derwent Publications Ltd., London, GB; Class D16, AN 1996-220420 XP002264207 & RU 2 044 045 C (MOSC KRISTALL WKS STOCK CO), 20 September 1995 (1995-09-20)
- DATABASE WPI Section Ch, Week 200013 Derwent Publications Ltd., London, GB; Class D16, AN 2000-145962 XP002264208 & RU 2 120 965 C (KOSITSKII E YA), 27 October 1998 (1998-10-27)

## Description

The present invention relates to vodka and to a process to prepare vodka comprising mixing water and absolute alcohol, treating the mixture with activated coal followed by filtration, adding sugar, aroma compounds and optionally other ingredients.

At present, a widely known method of production of vodka is consecutive mixing of water-alcohol liquid with sugar syrup, various aroma compounds like for instance synthetic aromatizers for disguising the fusel odor of alcohol, optionally other ingredients and subsequent filtering of the mixture [Retseptury likerno-vodochnykh izdelii i vodok (Formulas of alcoholic beverages and vodkas) Moscow: Legkaya promyshlennost, 1981].

Such method is rather simple technologically, however, the vodka produced by this method has insufficiently high organoleptic parameters. Sugar settles on the surface of activated coal decreasing its activity and adsorbability. It decreases the filtration level of the mixture and the ready vodka manifests the residual traces of fusel oils. In addition, the vodka produced by the known method has a strong odor of the introduced aromatizer and the beverage has an unnatural "synthetic" odor. The aromatizer evaporates with time and, accordingly, alcoholic aftertaste increases in the odor and taste. In addition, such vodka has usual ordinary taste and insufficiently high organoleptic parameters.

Russian patent no. 2171283 discloses a method of production of vodka by obtaining water-alcohol liquid, filtration, mixing of the water-alcohol liquid with sugar syrup and other ingredients. According to this method the obtained water-alcohol liquid is filtered in a column with activated coal, then sugar and other ingredients of the formula of vodka are introduced in the obtained purified water-alcohol liquid, it is mixed, kept until it becomes homogeneous, and filtered prior to bottling (Russian Patent 2171281).

Organoleptic parameters of this vodka are better than in the vodka produced by the method first mentioned. However, fusel oils present in the water-alcohol liquid still form a film on the surface of activated coal and this retards the technological process, as the flow rate through the column is slowing down. The lower filtration rate impairs, accordingly, the taste of vodka.

RU 2167932 and SU 863632 disclose further vodka beverages.

It is an object of the present invention to provide a process which makes it possible to improve organoleptic parameters of vodka.

The present invention provides a process as mentioned in the preamble characterized in that the mixture of water and alcohol after the treatment with activated coal is cooled down to a temperature of - 10 °C to - 15 °C, at which temperature the mixture is maintained for about 4 - 8 hours, after which the resulting mixture is filtered, gradually adapted to room temperature, aroma and optionally other ingredients are added to the filtrate and optionally the resulting mixture at room temperature is filtered again before bottling. Normally room temperature will be in the range of about 18 °C - 25 °C.

Preferably, the filtrate is adapted to room temperature by pumping the filtrate to a non-isolated tank until room temperature has been attained.

More preferably, the aroma compounds applied in said process comprise extract of flax seeds.

Still more preferred, water with an alkalinity of less than 3 meq/l is applied for the process of the present invention.

In a preferred embodiment of the process of the invention the mixture after cooling down is filtered through a carbon filter, preferably a Z-carbon filter.

In still a preferred embodiment of the process of the invention the resulting mixture at room temperature is filtered over a series of micro filters before bottling, preferably immediately before bottling.

Preferably, water for the water-alcohol liquid is obtained by mixing softened water and water treated by the method of reverse osmosis, normalized by the alkalinity parameter within about 2-3 meq/l.

Furthermore, the water-alcohol liquid is preferably treated with activated coal in the coal column at a filtration rate of 40-50 decaliters/hour.

The present invention further provides a vodka comprising
- a percentage of absolute alcohol in water of 35 - 50 vol %,
- 4 - 6 mM sugar
- 0.05 - 0.2 mM of bicarbonate, preferably sodium bicarbonate and
- 0.02 - 0.04 vol % of extract of flax seeds of first discharge.

Preferably said vodka comprises a minor amount of impurities per 1 absolute alcohol of
- acetic aldehyde lower than 3 mg
- fusel oil lower than 6 mg
- ester lower than 5 mg
- methyl alcohol lower than 0.2 ml and
with an alkalinity characteristic of less than 3 meq, more preferably less than 2 meq.

Throughout this patent application the wording alkalinity characteristic has been defined as volume in ml of hydrochloric acid with a concentration 0.1 M (viz. 0.1 Mol/l) of HCl used for titration of 100 ml of vodka.

Still more preferred the vodka of the present invention comprises
- a percentage of absolute alcohol in water of about 40 vol %,
- 5.3 mM of sugar,
- 0.12 mM of sodium bicarbonate and
- 0.032 vol % of extract of flax seeds.

The objects of the present invention are accomplished in the following way:
to prepare water for water-alcohol liquid the mixture is composed of softened water and water treated by the method of reverse osmosis, normalized by the parameter of alkalinity within 2-3 meq/l. Then the obtained water is mixed with ethyl alcohol, then the obtained water-alcohol liquid is passed through the coal column with activated coal at the filtration rate of 40-50 decaliters/hour. The treated mixture is directed to the heat isolated cooler for cooling to -10 °C - -15 °C, then it is pumped at this temperature to a heat isolated tank and kept there during 4-8 hours. After keeping, the cooled mixture is filtered through a Z-carbon filter and pumped to a non-heat isolated tank for "rest" until the room temperature of about 18 °C - 25 °C is gradually attained. Sugar syrup is added to the obtained water-alcohol liquid and if desired, other ingredients of the vodka to be prepared and for instance aromatic alcohol. Prior to bottling, the produced vodka is consecutively filtered through a series of microfilters.

Sugar can be added at any moment of the process, the other ingredients are preferably added after the mixture has been brought to room temperature.

Profound cooling to the temperature of -10° - -15°C considerably increases the density of the water-alcohol liquid, and leads to formation on walls of the cooler of a fine crystalline film being a mixture of aldehydes, fusel oils, and methanol. Filtration at such low temperature still better purifies the water-alcohol liquid while not destroying the molecular system water-alcohol formed at cooling of the water-alcohol liquid. The same aim is attained by gradual natural warming of the mixture after filtration with an appropriate time lag.

The present invention will be exemplified further by the following example which is not to be considered as restricting the scope of the invention in any way.

### Example

Vodka "Stolichnaya Elit" is prepared using alcohol "Lux" and water obtained by mixing softened water with water preliminarily treated by the method of reverse osmosis, normalized by a parameter of alkalinity within 2-3 meq/l. Alcohol or spirit "Lux" has been described in the State Standard of the Russian Federation, no. P 51652-2000.
With regards to its physical and chemical indicators spirit "lux" must conform the requirements in the table below.

| Indicator | Norm for the spirit |
|---|---|
| | |
| Volume of ethyl spirits, %, not less than | 96,3 |
| Sulphuric acid test for identification of purity | Passed |
| Oxidability test, min., 20 °C, not less than | 22 |
| Mass concentration of aldehydes to absolute alcohol, mg/dm³, no more than | 2 |
| Mass concentration of fusel oil: - 1 propanol, 2-propanol, isobutyl alcohol, 1-butanol, isoamyl alcohol to absolute alcohol, mg/dm³, no more than | 6 |
| Isoamyl and isobutyl alcohols (3:1) to absolute alcohol, mg/dm³, no more than | 2 |
| Mass concentration of ester to absolute alcohol, mg/ dm³, no more than | 5 |
| Volume of methyl spirit to absolute alcohol, %, no more than | 0,03 |
| Mass concentration of free acids (with no CO₂) to absolute alcohol, mg/dm³, no more than | 8 |
| Mass concentration of solid residual to absolute alcohol, mg/dm³, no more than | - |
| Mass concentration of basic volatile nitrogens to nitrogen, in 1 dm³ of absolute alcohol, mg, no more than | - |

Spirit "Lux" is produced from various sorts of grains and mix of grain and potatoes, volume of starch in the mix should not exceed 35% for production of spirit "Lux".

In a mixing tank the alcohol and water are mixed to obtain the mixture of 40%, then the mixture is passed through the column with activated coal at the filtration rate of 40-50 decaliters/hour. The filtered water-alcohol mixture is passed through the heat exchanger to decrease its temperature to -10° °C - -15 °C, the cooled mixture is kept in the heat isolated tank during 4-8 hours depending on the rate of formation of the crystalline film on walls of the tank. The cooled mixture is filtered through a Z-carbon filter, the temperature of the mixture is increased by 6 °C - 10 °C, the obtained filtrate is pumped to a non-isolated tank for "rest" until the room temperature of 18 °C - 25 °C is gradually attained. To the obtained water-alcohol liquid 65.8% sugar syrup is added and, other ingredients of the vodka and aromatic alcohol.

To the other ingredients belongs the use of grains for production of extract of flax for 1000 dal. of vodka as given in the following tabel:

| Name of raw material | Use, in kilos | Liquid of water and spirit | | Time of extraction, in days | Extract of the first discharge | | |
|---|---|---|---|---|---|---|---|
| | | | | | (filtered) | | |
| | | Volume in liters | Volume in % | | Volume, in liters | Volume in % | % from water and spirits liquid |
| Seeds of flax | 0.4 | 4.0 | 50 | 5 | 3.2 | 49 | 80 |

The obtained composition is kept for 1-5 hours and then the produced vodka is, prior to bottling, consecutively filtered through a series of micro filters and bottled.

| The ready for use vodka has the following parameters: | |
|---|---|
| Strength (volume %) | 40.0 |
| Appearance | Transparent, colorless liquid with glitter |
| Taste | Soft, harmonious, with rounded vodka shades |
| Aroma | Characteristic of vodka, without admixture of fusel oil odor |

The produced vodka received 9.8 points from tasters.

The following tabel gives more characteristics:

### COMPOUNDING OF VODKA STOLICHNAYA ELIT

### Indices of Vodka

### Physicochemical

| | |
|---|---|
| Volume, % | 40,0 |
| | |
| Alkalinity- volume of hydrochloric acid with concentration with (HCL)=0,1 molecule/dm³, used for titration of 100 cm³ of vodka, cm³, not exceeding | 2,0 |
| | |
| Mass concentration of acetic aldehyde in 1 dm³ of absolute alcohol, mg, not exceeding | 3,0 |
| | |
| Mass concentration of fusel oil (1-propanol, 2-propanol, iso-butanol, 1-butanol, iso-amilol) in 1dm³ of absolute alcohol, mg, not exceeding | 6,0 |
| | |
| Mass concentration of ester, in 1 dm³ of absolute alcohol, mg, not exceeding | 5,0 |
| | |
| Volumetric share of methyl alcohol, absolute alcohol equivalent, %, not exceeding | 0,02 |

### Organoleptic

| | |
|---|---|
| Appearance | clear liquid without extraneous impurities and sediment |
| Color | colorless |
| Taste | soft, peculiar to vodka |
| Aroma | specific vodka aroma |

### MIXING FOR 1000 DAL

| **Name of component** | **Measuring unit** | **Quantity** |
|---|---|---|
| | | |
| Ethyl spirit rectified "Lux" | L | Spirit and water equivalent to |
| | | |
| Potable water improved | L | volume of 40% |
| Sugar syrup, 68% | L | 20,7 |
| Extract of flax seeds of 1^{st} discharge | L | 3,2 |
| SodiumBicarbonate | kg | 0,1 |

### CONSUMPTION OF INGREDIENTS FOR 1000 DAL OF VODKA

| **Name of Ingredients** | **Quantity (kg)** |
|---|---|
| Sugar granulated purified | 18,0 |
| Sodium bicarbonate | 0,1 |
| Oil Flax (seeds) | 0,4 |

The present invention provides a process which makes it possible to produce vodka with improved organoleptic parameters.

## Claims

1. Vodka, comprising a percentage of absolute alcohol in water of 35-50 vol %, 4-6 mM sugar, 0.05 - 0.2 mM of bicarbonate, preferably sodium bicarbonate, 0.02 - 0.04 vol % of extract of flax seeds of first discharge, and with an amount of impurities per litre absolute alcohol of acetic aldehyde lower than 3 mg, fusel oil lower than 6 mg, ester lower than 5 mg, methyl alcohol lower than 0.2 ml and with an alkalinity characteristic of less than 3 meq.

2. Vodka according to claim 1 comprising a percentage of absolute alcohol in water of about 40 vol %, 5.3 mM of sugar, 0.12 mM of sodium bicarbonate and 0.032 vol % of extract of flax seeds.

3. Process to prepare vodka comprising the steps of mixing water and absolute alcohol, treating the mixture with activated coal followed by filtration, and adding sugar, aroma compounds and optionally other ingredients **characterized in that**, after the treatment with activated coal, the mixture of water and alcohol is cooled down to a temperature of -10°C to -15°C, at which temperature the mixture is maintained for about 4-8 hours, after which the resulting mixture is filtered, gradually adapted to room temperature, optionally aroma and other ingredients are added to the filtrate and optionally the resulting mixture is filtered again at room temperature before bottling.

4. Process to prepare vodka according to claim 3 whereby the filtrate is adapted to room temperature by pumping the filtrate to a non-isolated tank until room temperature has been attained.

5. Process to prepare vodka according to claim 3 or 4 whereby the aroma compounds comprise extract of flax seeds.

6. Process to prepare vodka according to claim anyone of the claims 3-5 whereby water with an alkalinity of less than 3 meq/l is applied.

7. Process to prepare vodka according to anyone of the claims 3-6 whereby the cooled down mixture is filtered through a carbon filter.

8. Process to prepare vodka according to anyone of the claims 3-7 whereby the resulting mixture at room temperature is filtered over a series of micro filters before bottling

## Patentansprüche

1. Wodka, mit einem Anteil an absolutem Alkohol in Wasser von 35 - 50 Vol.-%, 4-6 mmol Zucker, 0,05 - 0,2 mmol Bicarbonat, vorzugsweise Natriumbicarbonat, 0,02 - 0,04 Vol-% eines Extrakts von Leinsamen erster Pressung und mit einer Menge an Verunreinigungen pro Liter des absoluten Alkohols wie folgt, nämlich weniger als 3 mg Acetaldehyd, weniger als 6 mg Fuselöl, weniger als 5 mg Ester, weniger als 0,2 ml Methylalkohol, und mit einer Alkalinität von weniger als 3 Milliäquivalenten.

2. Wodka nach Anspruch 1, mit einem Anteil an absolutem Alkohol in Wasser von etwa 40 Vol.-%, 5,3 mM Zucker, 0,12 mM Natriumbicarbonat und 0,032 Vol-% eines Extrakts der Leinsamen.

3. Verfahren zum Herstellen von Wodka, das folgende Schritte aufweist, nämlich Vermischen von Wasser mit absolutem Alkohol, Behandeln des Gemischs mit Aktivkohle gefolgt von einer Filtration, Zugeben von Zucker, Aromastoffen und optional anderen Bestandteilen, **dadurch gekennzeichnet, dass** nach der Behandlung mit Aktivkohle das Gemisch aus Wasser und Alkohol auf eine Temperatur von 10°C - 15°C abgekühlt wird, das Gemisch bei dieser Temperatur für etwa 4 - 8 Stunden gehalten wird, danach das entstehende Gemisch filtriert wird, schrittweise auf Raumtemperatur gebracht wird, optional Aromastoffe und andere Bestandteile zu dem Filtrat zugegeben werden und das entstehende Gemisch optional bei Raumtemperatur noch einmal vor einem Abfüllen in Flaschen filtriert wird.

4. Verfahren zum Herstellen von Wodka nach Anspruch 3, wobei das Filtrat **dadurch** auf Raumtemperatur gebracht wird, dass das Filtrat in einen nicht isolierten Tank gepumpt wird, bis die Raumtemperatur erreicht ist.

5. Verfahren zum Herstellen von Wodka nach Anspruch 3 oder 4, wobei die Aromastoffe einen Extrakt von Leinsamen aufweisen.

6. Verfahren zum Herstellen von Wodka nach einem der Ansprüche 3 - 5, wobei Wasser mit einer Alkalinität von weniger als 3 Milliäquivalent/l verwendet wird.

7. Verfahren zum Herstellen von Wodka nach einem der Ansprüche 3-6, wobei das abgekühlte Gemisch durch einen Kohlefilter filtriert wird.

8. Verfahren zum Herstellen von Wodka nach einem der Ansprüche 3-7, wobei das entstehende Gemisch bei Raumtemperatur über eine Serie von Mikrofiltern vor einem Abfüllen in Flaschen filtriert wird.

## Revendications

1. Vodka, comprenant un pourcentage d'alcool absolu dans l'eau de 35-50 % en volume, 4-6 mM de sucre, 0,05-0,2 mM de bicarbonate, de préférence de bicarbonate de sodium, 0,02-0,04 % en volume d'extrait de graines de lin de première expulsion et une quantité d'impuretés d'aldéhyde acétique inférieure à 3 mg, d'huile de fusel inférieure à 6 mg, d'ester inférieur à 5 mg, d'alcool méthylique inférieure à 0,2 ml, par litre d'alcool absolu, et avec une caractéristique d'alcalinité inférieure à 3 meq.

2. Vodka selon la revendication 1, comprenant :
- un pourcentage d'alcool absolu dans l'eau d'environ 40 % en volume,
- 5,3 mM de sucre,
- 0,12 mM de bicarbonate de sodium, et
- 0,032 % en volume d'extrait de graines de lin.

3. Procédé pour préparer de la vodka comprenant le mélange d'eau et d'alcool absolu, le traitement du mélange avec du charbon activé suivi d'une filtration, l'ajout de sucre, de composés d'arôme et éventuellement d'autres ingrédients, **caractérisé en ce que** le mélange d'eau et d'alcool après le traitement avec du charbon activé est refroidi jusqu'à une température de 10°C à -15°C, température à laquelle le mélange est maintenu pendant environ 4-8 heures, après quoi le mélange résultant est filtré, adapté graduellement à la température ambiante, éventuellement des arômes et d'autres ingrédients sont ajoutés au filtrat et éventuellement le mélange résultant à température ambiante est encore filtré avant mise en bouteille.

4. Procédé pour préparer de la vodka selon la revendication 3, par lequel le filtrat est adapté à la température ambiante en pompant le filtrat vers un réservoir non isolé jusqu'à ce que la température ambiante ait été atteinte.

5. Procédé pour préparer de la vodka selon la revendication 3 ou 4, par lequel les composés d'arôme comprennent un extrait de graines de lin.

6. Procédé pour préparer de la vodka selon l'une quelconque des revendications 3-5, par lequel de l'eau ayant une alcalinité inférieure à 3 meq/l est appliquée.

7. Procédé pour préparer de la vodka selon l'une quelconque des revendications 3-6, par lequel le mélange refroidi est filtre au travers d'un filtre à charbon.

8. Procédé pour préparer de la vodka selon l'une quelconque des revendications 3-7, par lequel le mélange résultant à température ambiante est filtré sur une série de micro-filtres avant mise en bouteille.
